# EUROPÄISCHE PATENTANMELDUNG

(11) **EP 4 764 241 A1**
(43) Veröffentlichungstag der Anmeldung: **24.06.2026**
(21) Anmeldenummer: 25216810.9
(22) Anmeldetag: 19.11.2025
(51) Int. Cl.: F16C 19/36, F03D 80/70, F16C 35/067

(54) **LAGERUNGSANORDNUNG UND WINDKRAFTANLAGE**

(30) Priorität: 17.12.2024 DE 102024212030
(71) Anmelder: ZF Friedrichshafen AG, 88046 Friedrichshafen (DE); ZF Wind Power Antwerpen NV, 3920 Lommel (BE)
(72) Erfinder: Patel, Priyangu, 88046 Friedrichshafen (DE); De Laet, Wim, 2000 Antwerpen (BE)
(74) Vertreter: ZF Friedrichshafen AG

(57) **Zusammenfassung**

Die Erfindung betrifft eine Lagerungsanordnung für eine Rotorwelle (16) einer Windkraftanlage (10). Die Lagerungsanordnung weist ein Gehäuse (40) und wenigstens ein Lager (18, 38) auf. Das Lager (18, 38) ist mit einem Außenring (52) in dem Gehäuse (40) befestigt mit einem Innenring (50) an der Rotorwelle (16). Die Lagerungsanordnung ist dazu ausgebildet, eine axiale auf den Außenring (52) wirkende Kraft einzustellen, um eine Vorspannung des Lagers (18, 38) vorzugeben. Zudem bezieht sich die Erfindung auf eine Windkraftanlage (10).

## Beschreibung

Die vorliegende Erfindung bezieht sich auf eine Lagerungsanordnung für eine Rotorwelle einer Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben. Eine Drehzahl und die an dem Rotor wirkenden Lasten können im Betrieb der Windkraftanlage schwanken, beispielsweise aufgrund von Windböen. Zudem können Rotoren einen großen Durchmesser aufweisen und sehr schwer sein. Dadurch wirken starke und auch wechselnde Lasten auf die Lager für die Rotorwelle. Entsprechend müssen diese Lager oft gewartet werden und alternativ oder zusätzlich aufwendig überwacht werden. Deshalb ist bei der Montage eine hohe Präzision erforderlich, um einen übermäßigen Verschleiß durch eine Abweichung von einem Sollmontagezustand zu vermeiden.

### Darstellung der Erfindung

Ein erster Aspekt betrifft eine Lagerungsanordnung für eine Rotorwelle einer Windkraftanlage. Die Windkraftanlage kann einen Turm und eine daran angeordnete Gondel aufweisen. Der Turm erstreckt sich beispielsweise mit seiner Längserstreckung in eine vertikale Richtung. Die Gondel kann beispielsweise drehbar oder drehfest an dem Turm gelagert sein. Die Gondel kann beispielsweise oberseitig an dem Turm angeordnet sein. Der Turm kann beispielsweise hohl ausgebildet sein. Der Turm kann sich zu seinem oberen Ende hin verjüngen.

Die Windkraftanlage kann beispielsweise einen Rotor, ein Getriebe und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor, das Getriebe und der Generator können beispielsweise an einer Gondel der Windkraftanlage befestigt sein. Die Rotorwelle kann in der Gondel drehbar gelagert sein. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Die Rotorwelle, das Getriebe und der Generator können beispielsweise Teile eines Antriebsstrangs der Windkraftanlage bilden. Die Rotorwelle kann ein Teil der Lagerungsanordnung sein oder ein dazu separates Teil bilden. Die Drehachse des Rotors und auch der Rotorwelle können eine axiale Richtung und eine radiale Richtung der Lagerungsanordnung definieren.

Die Lagerungsanordnung weist ein Gehäuse und wenigstens ein Lager auf. Das Gehäuse und das wenigstens eine Lager können eine Hauptlagerung für den Antriebsstrang der Windkraftanlage bilden. Der Antriebsstrang der Windkraftanlage kann beispielsweise ausschließlich über die Hauptlagerung an der Gondel befestigt sein. Die Hauptlagerung kann mehrere Lager aufweisen, beispielsweise exakt zwei Lager. Im Folgenden wird zur Vereinfachung von dem Lager gesprochen, wobei jeweilige Merkmale und Eigenschaften auch weitere Lager betreffen können, sofern vorhanden und anwendbar. Das Gehäuse kann einstückig oder mehrteilig ausgebildet sein. Das Gehäuse kann beispielsweise ein Gußteil oder Schmiedeteil sein. Das Gehäuse kann an der Gondel befestigt sein, beispielsweise durch eine Verschraubung mit einem Maschinenbett. Das Gehäuse und das Maschinenbett können separate Bauteile sein. Das Lager kann beispielsweise als Wälzlager ausgebildet sein. Die Rotorwelle kann mittels des Lagers drehbar an dem Gehäuse gelagert sein.

Das Lager weist einen Außenring und einen Innenring auf. Der Innenring kann relativ zu dem Außenring um die Drehachse drehbar sein. Zwischen dem Außenring und dem Innenring können Wälzkörper angeordnet sein. Das Lager ist mit dem Außenring in dem Gehäuse befestigt. Beispielsweise kann der Außenring mit einem Außenumfang an einem Innenumfang des Gehäuses anliegen. Der Außenring kann auch bereichsweise wenigstens auf einer axialen Seite an dem Gehäuse stirnseitig anliegen, beispielsweise an einem Absatz des Gehäuses. Das Lager ist mit einem Innenring an der Rotorwelle befestigt. Beispielsweise kann der Innenring mit einem Innenumfang an einem Außenumfang der Rotorwelle anliegen. Der Innenring kann auch bereichsweise wenigstens auf einer axialen Seite an der Rotorwelle stirnseitig anliegen, beispielsweise an einem Absatz des Gehäuses.

Das Lager kann beispielsweise in dem Gehäuse angeordnet sein. Die Gondel kann beispielsweise das Maschinenbett aufweisen, an welchem der Antriebsstrang befestigt ist. Die Rotorwelle kann nur über die Hauptlagerung an der Gondel gelagert sein. Das Getriebe kann beispielsweise ebenfalls nur über die Hauptlagerung an der Gondel gelagert sein. Dann sind beispielsweise stationäre Bauteile des Gehäuses, wie ein Getriebegehäuse, an dem Gehäuse befestigt. Wenigstens ein drehbares Teil, wie eine Eingangswelle des Getriebes, kann über die Rotorwelle an dem Lager gelagert sein. Optional kann auch der Generator nur über die Hauptlagerung an der Gondel gelagert sein, beispielsweise mittelbar über das Getriebe.

Der Außenring kann beispielsweise mit einer Presspassung, Übergangspassung oder Spielpassung in dem Gehäuse sitzen. Alternativ oder zusätzlich kann der Außenring an dem Gehäuse geklemmt oder verschraubt sein. Der Innenring kann beispielsweise mit einer Presspassung, Übergangspassung oder Spielpassung an der Rotorwelle aufsitzen. Alternativ oder zusätzlich kann der Innenring an der Rotorwelle geklemmt oder verschraubt sein. Eine Pressung aufgrund der Passung des Innenrings mit der Rotorwelle kann größer sein als eine Pressung aufgrund der Passung des Außenrings mit dem Gehäuse. Dadurch kann eine Positionierung des Außenrings einfacher sein als eine Positionierung des Innenrings. Entsprechend kann eine Vorspannung des Lagers an dem Außenring einfacher eingestellt werden als an dem Innenring. Üblicherweise wird bei Windkraftanlagen aber die Vorspannung der Lager an dem Innenring eingestellt. Aufgrund einer üblichen starken Presspassung ist die Vorspannung dann aber oft nur unpräzise einstellbar und auch stark temperaturabhängig.

Vorliegend ist die Lagerungsanordnung gemäß dem ersten Aspekt dazu ausgebildet, eine axiale auf den Außenring wirkende Kraft einzustellen, um eine Vorspannung des Lagers vorzugeben. Der Außenring kann beispielsweise vor Inbetriebnahme axial relativ zu dem Innenring durch die Beaufschlagung mit der Axialkraft axial verlagert werden, um eine Vorspannung einzustellen. Die Vorspannung kann einer Lagerluft entsprechen. Eine Vorspannung kann eine Kraft sein, mit welcher der Innenring und der Außenring im Stillstand gegeneinandergedrückt werden. Die Vorspannung kann eine axiale Vorspannung sein. Durch die Vorspannung kann das Lager angestellt werden. Die Vorspannung kann auch auf weitere Lager wirken, wie ein zweites Lager der Hauptlagerung. Durch eine präzise eingestellte Vorspannung kann eine Steifigkeit der Lagerung und alternativ oder zusätzlich eine Laufgenauigkeit erhöht werden. Zudem kann eine genaue Führung der Rotorwelle, ein Ausgleich von Verschleiß und Setzvorgängen im Betrieb und insgesamt eine hohe Lebensdauer erreicht werden.

Die axiale Position des Außenrings kann beispielsweise eine absolute Position, eine Position relativ zu Innenring, alternativ oder zusätzlich eine Position relativ zu dem Gehäuse sein. Das Einstellen kann beispielsweise mechanisch durch die Beaufschlagung mit der Axialkraft erfolgen. Der Außenring kann in eine axiale Richtung mit einer einstellbaren Kraft gepresst werden, beispielsweise in Richtung eines nächstliegenden axialen Endbereichs des Gehäuses. Die Lagerungsanordnung kann dafür ausgebildet sein, dass das Einstellen erfolgen kann, wenn der Innenring bereits an der Rotorwelle befestigt ist. Die Lagerungsanordnung kann dafür ausgebildet sein, dass das Einstellen erfolgen kann, wenn der Außenring bereits in dem Gehäuse angeordnet ist. Der Außenring kann durch das Einstellen gleichzeitig an dem Gehäuse befestigt werden. Durch das Einstellen kann der Außenring mit einer axialen Kraft beaufschlagt werden. Die Lagerungsanordnung kann für eine entsprechende Zugänglichkeit ausgebildet sein.

Das Einstellen der Vorspannung kann beispielsweise bei einer Endmontage erfolgen. Üblicherweise werden große Windkraftanlagen erst an deren Aufstellungsort zusammengebaut. Verschiedene Teile des Antriebsstrangs, wie die Hauptlagerung, die Rotorwelle, optional mit der Nabe, das Getriebe und der Generator werden zunächst separat zu dem Aufstellungsort transportiert. Ein Zusammenbau erfolgt dann erst dort. Die Lagerungsanordnung kann dafür ausgebildet sein, dass die Einstellung der Vorspannung in der Gondel und bei der Endmontage erfolgen kann.

In einer Ausführungsform der Lagerungsanordnung kann es vorgesehen sein, dass das Lager als Kegelrollenlager ausgebildet ist. Es können auch alle Lager wenigstens der Hauptlagerung oder der Lagerungsanordnung als Kegelrollenlager ausgebildet sein. Die Lager können einreihig oder mehrreihig ausgebildet sein. Ein Kegelrollenlager kann axial und radial hoch belastbar sein. Es können zwei Kegelrollenlager vorgesehen sein, welche gegeneinander angestellt sind. Die Wälzkörper eines Kegelrollenlagers können als Kegelrollen ausgebildet sein. Alternativ kann beispielsweise ein Pendelrollenlager, Schrägkugellager oder Kugelrollenlager eingesetzt werden.

In einer Ausführungsform der Lagerungsanordnung kann es vorgesehen sein, dass die Lagerungsanordnung ein lösbar an dem Gehäuse befestigtes Arretierelement aufweist. Das Arretierelement kann beispielsweise als Arretierring ausgebildet sein. Das Arretierelement kann ein metallisches Bauteil sein. Das Arretierelement kann für eine Befestigung an dem Gehäuse ausgebildet sein, beispielsweise mittels Schrauben in voneinander beabstandeten axialen Durchgangsöffnungen entlang seines Umfangs. Der Außenring kann in seiner axialen Position mittels des Arretierelements in dem Gehäuse gehalten werden. Beispielsweise kann der Außenring gegen einen Anschlag, beispielsweise gebildet durch einen Absatz in dem Gehäuse, axial durch das Arretierelement gepresst werden. Das Arretierelement kann beispielsweise stirnseitig gegen den Außenring pressen. Alternativ kann auch axial beidseitig von dem Außenring jeweils ein Arretierelement vorgesehen werden, zwischen welchen der Außenring beispielsweise einspannbar ist.

Die Lagerungsanordnung kann ein Set von Arretierelementen mit unterschiedlichem Abstand zwischen einer Auflagefläche an dem Gehäuse und an dem Außenring aufweisen. Beispielsweise können die unterschiedlichen Arretierelemente in axialer Richtung unterschiedlich dick sein. Bei der Befestigung an dem Gehäuse wirken so je nach ausgewähltem Arretierelement unterschiedlich starke Kräfte auf den Außenring. Die axiale Kraft kann so an Toleranzen und die endgültige Positionierung des Innenrings in der individuellen Windkraftanlage angepasst eingestellt werden, um die gewünschte Vorspannung zu erreichen.

Alternativ oder zusätzlich kann zwischen dem Gehäuse und dem Arretierelement für das Einstellen der axial auf den Außenring wirkenden Kraft wenigstens ein Abstandselement einspannbar sein. Die Lagerungsanordnung kann ein Set von Abstandselementen mit unterschiedlichem Abstand zwischen einer Auflagefläche an dem Gehäuse und an dem Arretierelement aufweisen. Beispielsweise können die unterschiedlichen Abstandselemente in axialer Richtung unterschiedlich dick sein. Bei der Einspannung an dem Gehäuse wirken so je nach ausgewähltem Abstandselement unterschiedlich starke Kräfte auf den Außenring. Die axiale Kraft kann so an Toleranzen und die endgültige Positionierung des Innenrings in der individuellen Windkraftanlage angepasst eingestellt werden, um die gewünschte Vorspannung zu erreichen.

Das Abstandselement kann beispielsweise als Abstandsring, Unterlegplatte oder Unterlegscheibe ausgebildet sein. Das Abstandselement kann als metallisches Bauteil ausgebildet sein. Das Abstandselement kann nur eingespannt sein oder beispielsweise mit dem Arretierelement zusammen an dem Gehäuse angeschraubt werden. Sofern beidseitig zu dem Außenring Arretierelemente vorgesehen sind, kann nur zwischen einem oder auch zwischen beiden Arretierelementen und dem Gehäuse jeweils ein Abstandselement einspannbar sein. Zwischen einem optional vorhandenen Anschlag des Gehäuses für den Außenring und dem Außenring können ebenfalls selektiv Abstandselemente einspannbar sein. Die Lagerungsanordnung kann beispielsweise wenigstens ein Abstandselement aufweisen.

In einer Ausführungsform der Lagerungsanordnung kann es vorgesehen sein, dass die Lagerungsanordnung ein lösbar an der Rotorwelle befestigtes weiteres Arretierelement aufweist, mittels welchem der Innenring in seiner axialen Position in der Rotorwelle gehalten wird. Die Gestaltung kann dabei analog zu dem Halten des Außenrings an dem Gehäuse mittels des zuvor beschriebenen Arretierelements sein.

Das weitere Arretierelement kann für eine Befestigung an der Rotorwelle ausgebildet sein, beispielsweise mittels Schrauben in voneinander beabstandeten axialen Durchgangsöffnungen. Das weitere Arretierelement kann als Verriegelungselement ausgebildet sein. Das weitere Arretierelement kann beispielsweise als eine auf der Rotorwelle aufgeschraubte Mutter ausgebildet sein. Der Innenring kann in seiner axialen Position mittels des weiteren Arretierelements außenseitig an der Rotorwelle gehalten werden. Beispielsweise kann der Innenring gegen einen Anschlag, beispielsweise gebildet durch einen Absatz in der Rotorwelle, axial durch das weitere Arretierelement gepresst werden. Das weitere Arretierelement kann beispielsweise stirnseitig gegen den Innenring pressen. Alternativ kann auch axial beidseitig von dem Innenring jeweils ein weiteres Arretierelement vorgesehen werden, zwischen welchen der Außenring einspannbar ist. Zwischen der Rotorwelle und dem weiteren Arretierelement für das Einstellen einer axial auf den Innenring wirkenden Kraft kann ein weiteres Abstandselement einspannbar sein. Das weitere Arretierelement kann als Verriegelungselement fungieren, mittels welchem der Innenring des Lagers in Position fixiert wird.

Die Lagerungsanordnung kann ein Set von weiteren Arretierelementen mit unterschiedlichem Abstand zwischen einer Auflagefläche an der Rotorwelle und dem Innenring aufweisen. Beispielsweise können die unterschiedlichen weiteren Arretierelemente in axialer Richtung unterschiedlich dick sein. Bei der Befestigung an der Rotorwelle wirken so je nach ausgewähltem weiterem Arretierelement unterschiedlich starke Kräfte auf den Innenring. Die axiale Kraft kann so an Toleranzen und die endgültige Positionierung des Außenrings in der individuellen Windkraftanlage angepasst eingestellt werden, um die gewünschte Vorspannung zu erreichen. Durch die Einstellung der axialen Kraft auf den Innenring kann eine Vorspannung in einem teilmontierten Zustand wenigstens teilweise vorgegeben werden und dann beispielsweise nach einem Zusammenbau des Antriebsstrangs an dem Außenring feinjustiert werden. Zudem kann eine axiale Position des Lagers so genauer vorgegeben werden.

Alternativ oder zusätzlich kann zwischen der Rotorwelle und dem weiteren Arretierelement für das Einstellen der axial auf den Innenring wirkenden Kraft wenigstens das weitere Abstandselement einspannbar sein. Die Lagerungsanordnung kann ein Set von weiteren Abstandselementen mit unterschiedlichem Abstand zwischen einer Auflagefläche an der Rotorwelle und an dem weiteren Arretierelement aufweisen. Beispielsweise können die unterschiedlichen weiteren Abstandselemente in axialer Richtung unterschiedlich dick sein. Bei der Einspannung an der Rotorwelle wirken so je nach ausgewähltem weiteren Abstandselemente unterschiedlich starke Kräfte auf den Innenring. Die axiale Kraft kann so an Toleranzen und die endgültige Positionierung des Außenrings in der individuellen Windkraftanlage angepasst eingestellt werden, um die gewünschte Vorspannung zu erreichen.

Das weitere Abstandselement kann beispielsweise als Abstandsring, Unterlegplatte oder Unterlegscheibe ausgebildet sein. Das weitere Abstandselement kann als metallisches Bauteil ausgebildet sein. Das weitere Abstandselement kann nur eingespannt sein oder beispielsweise mit dem weiteren Arretierelement zusammen an der Rotorwelle angeschraubt werden. Sofern beidseitig zu dem Innenring weitere Arretierelemente vorgesehen sind, kann nur zwischen einem oder auch zwischen beiden weiteren Arretierelementen und der Rotorwelle jeweils ein weiteres Abstandselement einspannbar sein. Zwischen einem optional vorhandenen Anschlag der Rotorwelle für den Innenring und dem Innenring können ebenfalls selektiv weitere Abstandselemente einspannbar sein. Die Lagerungsanordnung kann beispielsweise wenigstens ein weiteres Abstandselement aufweisen.

Jeweilige Arretierelemente und zugeordnete jeweilige Abstandselemente können auch als eine Baugruppe ausgebildet sein. Beispielsweise können das jeweilige Arretierelement und das zugeordnete jeweilige Abstandselement untrennbar ausgebildet sein. Beispielsweise kann das jeweilige Arretierelement und das zugeordnete jeweilige Abstandselement einstückig ausgebildet sein. Beispielsweise können Teile dieser Baugruppe, wie ein Segment, einstückig sowohl einen Teil des jeweiligen Arretierelements und des zugeordneten jeweiligen Abstandselements ausbilden, aber die Baugruppe aus mehreren miteinander lösbar verbundenen Teilen gebildet sein.

In einer Ausführungsform der Lagerungsanordnung kann es vorgesehen sein, dass jeweilige Abstandselemente mehrteilig ausgebildet sind. Beispielsweise kann das Abstandselement für den Außenring mehrteilig ausgebildet sein. Beispielsweise kann das weitere Abstandselement für den Innenring mehrteilig ausgebildet sein. Beispielsweise können jeweilige Abstandselemente in Umfangsrichtung geteilt sein. Beispielsweise können die jeweiligen Abstandselemente drei Segmente aufweisen, welche sich jeweils 120° eines Kreisbogens erstrecken. Durch die Mehrteiligkeit kann ein Einbau einfach sein, beispielweise durch eine Zugangsöffnung in einer umlaufenden Wand des Gehäuses. Die Segmente können beispielsweise miteinander verschraubt sein. Die Segmente können durch Passstifte zueinander ausgerichtet sein.

In einer Ausführungsform der Lagerungsanordnung kann es vorgesehen sein, dass jeweilige Arretierelemente mehrteilig ausgebildet sind. Beispielsweise kann das Arretierelement für den Außenring mehrteilig ausgebildet sein. Beispielsweise kann das weitere Arretierelement für den Innenring mehrteilig ausgebildet sein. Beispielsweise können jeweilige Arretierelemente in Umfangsrichtung geteilt sein. Beispielsweise können die jeweiligen Arretierelemente drei Segmente aufweisen, welche sich jeweils 120° eines Kreisbogens erstrecken. Durch die Mehrteiligkeit kann ein Einbau einfach sein, beispielweise durch eine Zugangsöffnung in einer umlaufenden Wand des Gehäuses. Die Segmente können beispielsweise miteinander verschraubt sein. Die Segmente können durch Passstifte zueinander ausgerichtet sein.

In einer Ausführungsform der Lagerungsanordnung kann es vorgesehen sein, dass die Lagerungsanordnung ein Dichtelement aufweist. Das Dichtelement kann an einem zugeordneten Arretierelement befestigt sein. Das Dichtelement kann integral mit dem Arretierelement ausgebildet sein. Beispielsweise kann das Dichtelement an einer axial dem Lager abgewandten Seite des Arretierelements angeordnet sein. Beispielsweise kann das Dichtelement das Lager einseitig abdichten, beispielsweise an einer Stirnseite. Das Dichtelement kann an dem Arretierelement für den Außenring oder auch an einem weiteren Arretierelement für den Innenring befestigt sein. Das Dichtelement kann sich radial erstrecken. Ein Abdeckelement kann gemeinsam das Dichtelement und das Arretierelement ausbilden, beispielsweise einstückig oder mit mehreren Segmenten. Das Dichtelement kann ringförmig ausgebildet sein. Das Dichtelement kann radial innenseitig und alternativ oder zusätzlich radial außenseitig eine Dichtfläche ausbilden. Das Dichtelement kann eine Labyrinthdichtung ausbilden. Das Dichtelement kann metallisch ausgebildet sein. Das Dichtelement kann zusätzlich Dichtungen, wie einen O-Ring, halten. Das Dichtelement dichtet beispielsweise an der Rotorwelle und alternativ oder zusätzlich dem Gehäuse ab. Das Dichtelement dichtet beispielsweise an einer Stirnseite das Lager ab, beispielsweise rotorseitig oder generatorseitig. Das Dichtelement erstreckt sich beispielsweise radial von dem Arretierelement zu der Rotorwelle. Alternativ erstreckt sich das Dichtelement beispielsweise von dem weiteren Arretierelement zu dem Gehäuse. Es können auch zwei Dichtelemente vorgesehen sein, beispielsweise auf axial gegenüberliegenden Seiten des Lagers. Das Dichtelement kann mit dem Arretierelement verschraubt sein.

In einer Ausführungsform der Lagerungsanordnung kann es vorgesehen sein, dass das Dichtelement mehrteilig ausgebildet ist. Beispielsweise können jeweilige Dichtelement in Umfangsrichtung geteilt sein. Beispielsweise können die jeweiligen Dichtelement drei Segmente aufweisen, welche sich jeweils 120° eines Kreisbogens erstrecken. Durch die Mehrteiligkeit kann ein Einbau einfach sein, beispielweise durch eine Zugangsöffnung in einer umlaufenden Wand des Gehäuses. Die Segmente können beispielsweise miteinander verschraubt sein. Die Segmente können durch Passstifte zueinander ausgerichtet sein.

In einer Ausführungsform der Lagerungsanordnung kann es vorgesehen sein, dass das Gehäuse an seiner umlaufenden Wand wenigstens eine Zugangsöffnung aufweist, durch welche die axiale auf den Außenring wirkende Kraft einstellbar ist. Alternativ oder zusätzlich kann durch die Zugangsöffnung auch die axiale auf den Innenring wirkende Kraft einstellbar sein. Durch die Zugangsöffnung können beispielsweise jeweilige Arretierelemente, Abstandselemente und alternativ oder zusätzlich Dichtelemente in einen Innenraum des Gehäuses eingebracht werden. Durch die Zugangsöffnung können beispielsweise jeweilige Arretierelemente, Abstandselemente und alternativ oder zusätzlich Dichtelemente in einen Innenraum des Gehäuses montiert werden. Für das Einbringen durch die Zugangsöffnung kann es erforderlich sein, diese Elemente in Segmente zu zerlegen. Durch die Zugangsöffnung hindurch können beispielsweise mehrteilige Elemente in dem Innenraum zusammengebaut werden. Dies kann auch erfolgen, wenn die Lager und alternativ oder zusätzlich die Rotorwelle bereits montiert ist. Die Zugangsöffnung kann eine oder mehrere radiale Durchgangsöffnungen aufweisen. Die Zugangsöffnung kann auch ein Gewicht des Gehäuses reduzieren. Die Zugangsöffnung kann im Betrieb offen sein oder durch einen Deckel verschlossen sein, beispielsweise öldicht, sofern die Lager nicht abgedichtet sind. Es können auch mehrere Zugangsöffnung vorgesehen sein.

Alternativ oder zusätzlich kann ein Generatorgehäuse an seiner umlaufenden Wand wenigstens eine Zugangsöffnung aufweist, durch welche hindurch die axiale auf den Außenring wirkende Kraft einstellbar ist. Dadurch kann beispielsweise die Vorspannung an einem generatorseitigen Lager einfach eingestellt werden. Die Zugangsöffnung kann dabei wie zuvor für das Gehäuse beschrieben gestaltet sein. Die Lagerungsanordnung kann das Generatorgehäuse oder auch den gesamten Generator aufweisen.

In einer Ausführungsform der Lagerungsanordnung kann es vorgesehen sein, dass die Lagerungsanordnung ein weiteres Lager aufweist. Das weitere Lager kann axial zu dem zuvor beschriebenen Lager beabstandet sein. Das weitere Lager kann mit dem zuvor beschriebenen Lager eine O-Anordnung oder eine X-Anordnung bilden. Das weitere Lager kann so wie das zuvor beschriebene Lager gestaltet sein. Beispielsweise kann eines der Lager ein rotorseitiges Lager der Hauptlagerung bilden und das weitere Lager ein generatorseitiges Lager der Hauptlagerung bilden. Das weitere Lager kann mit seinem Innenring an der Rotorwelle befestigt sein. Das weitere Lager kann mit seinem Außenring in dem Gehäuse, einem Verbindungsflansch oder einem weiteren Bauteil, wie dem Generator, befestigt sein. Beispielsweise kann das weitere Lager in dem Generatorgehäuse mit seinem Außenring befestigt sein. Das weitere Lager kann auch beispielsweise als Kegelrollenlager ausgebildet sein. Die Lagerungsanordnung kann dazu ausgebildet sein, eine axiale auf den Außenring des weiteren Lagers wirkende Kraft einzustellen, um eine Vorspannung des weiteren Lagers vorzugeben. Dafür können dem weiteren Lager zugeordnete Arretierelemente und optional Abstandselemente vorgesehen sein, so wie zuvor für das andere Lager beschrieben. Auch ein Dichtelement kann vorgesehen sein. Alternativ kann die Vorspannung des weiteren Lagers auch an dem Außenring des anderen Lagers vorgegeben werden. Die Vorspannung des weiteren Lagers kann also auch durch das Beaufschlagen des Außenrings des zuvor beschriebenen Lagers mit eingestellt werden, beispielsweise da sich insgesamt eine Vorspannung in der O-Anordnung oder X-Anordnung ergeben kann.

Ein zweiter Aspekt betrifft eine Windkraftanlage, welche die Befestigungsanordnung gemäß dem ersten Aspekt aufweist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage kann die Rotorwelle aufweisen. Die Windkraftanlage kann den Turm, die Gondel und den Antriebsstrang aufweisen. Die Rotorwelle oder auch der gesamte Antriebsstrang kann mittels der Lagerungsanordnung an der Gondel befestigt sein.

### Kurze Beschreibung der Figuren

Fig. 1 veranschaulicht schematisch eine Windkraftanlage.
Fig. 2 veranschaulicht schematisch in einer Schnittansicht eine herkömmliche Lagerungsanordnung für eine Rotorwelle der Windkraftanlage.
Fig. 3 veranschaulicht schematisch in einer Schnittansicht eine erste Ausführungsform der Lagerungsanordnung.
Fig. 4 veranschaulicht schematisch in einer Schnittansicht eine zweite Ausführungsform der Lagerungsanordnung.
Fig. 5 veranschaulicht schematisch in einer Schnittansicht eine dritte Ausführungsform der Lagerungsanordnung.
Fig. 6 veranschaulicht schematisch in einer Schnittansicht ausschnittsweise eine vierte Ausführungsform der Lagerungsanordnung.
Fig. 7 veranschaulicht schematisch in einer Schnittansicht ausschnittsweise eine fünfte Ausführungsform der Lagerungsanordnung.
Fig. 8 veranschaulicht schematisch in einer Schnittansicht ausschnittsweise eine sechste Ausführungsform der Lagerungsanordnung.
Fig. 9 veranschaulicht schematisch in einer Seitenansicht eine erste Ausführungsform eines Gehäuses der Lagerungsanordnung.
Fig. 10 veranschaulicht schematisch in einer Seitenansicht eine zweite Ausführungsform eines Gehäuses der Lagerungsanordnung.
Fig. 11 veranschaulicht schematisch in einer Perspektivansicht eine dritte Ausführungsform eines Gehäuses der Lagerungsanordnung.
Fig. 12 veranschaulicht schematisch in einer Perspektivansicht ein mehrteiliges Abdeckelement der Lagerungsanordnung.
Fig. 13 veranschaulicht schematisch in einer Perspektivansicht ausschnittsweise ein Segment des mehrteiligen Abdeckelements.
Fig. 14 veranschaulicht schematisch in einer anderen Perspektivansicht ausschnittsweise das Segment des mehrteiligen Abdeckelements.

### Detaillierte Beschreibung von Ausführungsformen

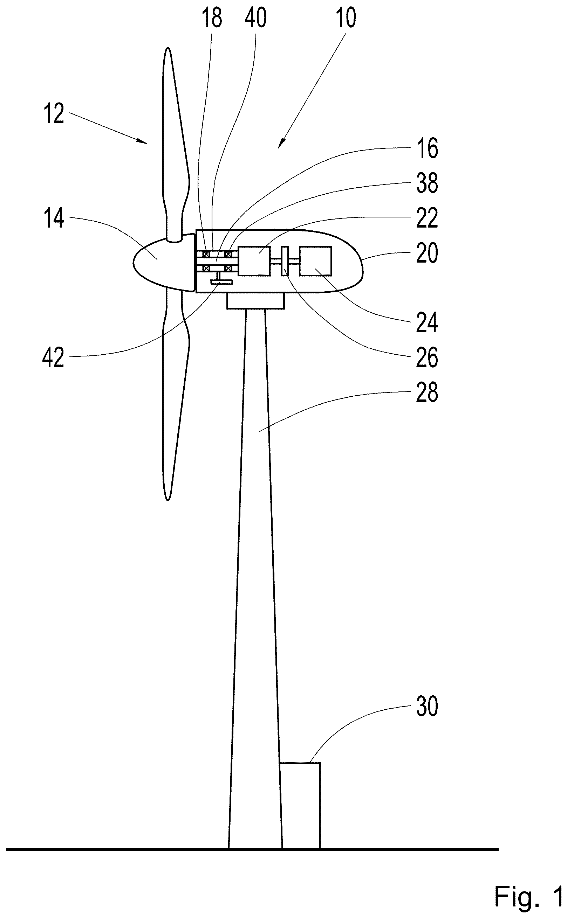

Fig. 1 veranschaulicht eine Windkraftanlage 10 mit einem Antriebsstrang in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei als Kegelrollenlager ausgebildete Wälzlager 18, 38 in einer Gondel 20 gelagert. Dafür ist ein Gehäuse 40 vorgesehen, welches an einem Maschinenbett 42 der Gondel 20 befestigt ist. Die zwei Wälzlager 18, 38 weisen eine O-Anordnung auf. Das Gehäuse 40 und die zwei Wälzlager 18, 38 bilden eine Lagerungsanordnung für die Rotorwelle 16. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet, welche auf eine Eingangswelle 76 des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 noch einen Netzanschluss 30 auf. Ein erstes der Wälzlager 18 ist dem Rotor 12 zugewandt und wird auch als rotorseitiges Lager 18 bezeichnet. Ein zweites der Wälzlager 38 ist dem Generator 24 zugewandt und wird auch als generatorseitiges Wälzlager 38 bezeichnet.

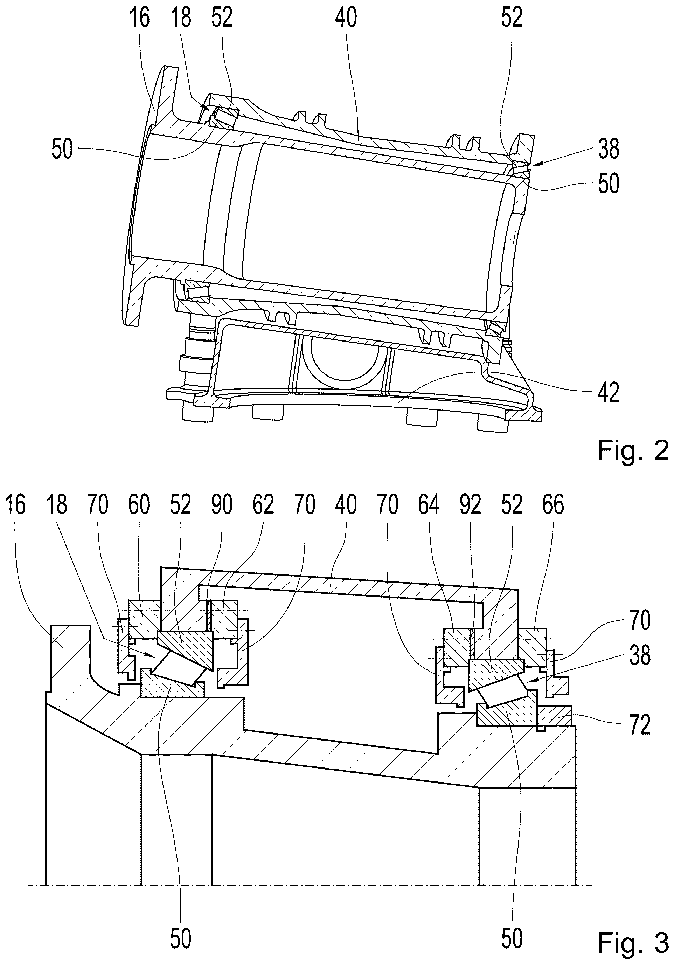

Fig. 2 veranschaulicht eine herkömmliche Lagerungsanordnung für die Rotorwelle 16 der Windkraftanlage 10. Eine Vorspannung der Lagerungsanordnung wird hier durch eine axiale Kraft auf einen Innenring 50 vorgegeben, mit welcher der Innenring 50 axial in Richtung des Rotors 12 über jeweilige Wälzkörper des zweiten Wälzlagers 38 gegen dessen Außenring 52 gepresst wird. Die beiden Wälzlager 18, 38 sind mit einer radialen Presspassung auf der Rotorwelle 16 montiert, wodurch die tatsächlich eingestellte Vorspannung mühsam vorzugeben und stark temperaturabhängig ist.

Fig. 3 zeigt eine erste Ausführungsform der Lagerungsanordnung, bei welcher die Vorspannung an dem Außenring 52 sowohl des ersten Wälzlagers 18 als auch des zweiten Wälzlagers 38 einstellbar ist. Der Außenring 52 der beiden Wälzlager 18, 38 ist mit einer weniger starken Passung an dem Gehäuse 40 montiert, wodurch das Vorgeben der Axialkraft durch Einstellen einer auf den Außenring 52 wirkenden axialen Kraft genau, einfach und weniger temperaturabhängig erfolgen kann.

Der Innenring 50 des ersten Wälzlagers 18 liegt stirnseitig an seiner Rotorseite an einem Absatz in der Rotorwelle 16 an. Der Außenring 52 des ersten Wälzlagers 18 wird stirnseitig an seiner Rotorseite durch ein erstes Arretierelement 60 in seiner axialen Position in dem Gehäuse 40 gehalten. Das erste Arretierelement 60 ist lösbar an dem Gehäuse 40 befestigt, hier durch eine Verschraubung. An dem ersten Arretierelement 60 ist stirnseitig auf dessen Rotorseite ein Dichtelement 70 befestigt, hier ebenfalls durch eine Verschraubung. Das Dichtelement 70 erstreckt sich radial zu der Rotorwelle 16 und dichtet das erste Wälzlager 18 rotorseitig ab. Der Außenring 52 des ersten Wälzlagers 18 wird stirnseitig an seiner Generatorseite durch ein zweites Arretierelement 62 in seiner axialen Position in dem Gehäuse 40 gehalten. An dem zweiten Arretierelement 62 ist stirnseitig auf dessen Generatorseite ebenfalls ein Dichtelement 70 befestigt, hier ebenfalls durch eine Verschraubung. Dieses Dichtelement 70 erstreckt sich ebenfalls radial zu der Rotorwelle 16 und dichtet das erste Wälzlager 18 somit generatorseitig ab.

Zwischen dem Gehäuse 40 und dem zweiten Arretierelement 62 ist ein erstes Abstandselement 90 eingespannt, welches hier gemeinsam mit dem zweiten Arretierelement 62 mit dem Gehäuse 40 verschraubt ist. Das zweite Arretierelement 62 drückt den Außenring 52 des ersten Wälzlagers 18 mit einer axialen Kraft axial in Richtung des Rotors 12 über die Wälzkörper des ersten Wälzlagers 18 gegen dessen Innenring 50, wodurch eine Vorspannung vorgegeben wird. Durch eine Auswahl des ersten Abstandselements 90 aus einem Set von axial unterschiedlich dicken Abstandselementen kann dabei die axiale Kraft eingestellt und somit auch die Vorspannung in dem ersten Wälzlager 18 vorgegeben werden. In anderen Ausführungsformen wird alternativ oder zusätzlich auch ein Abstandselement aus einem Set von unterschiedlich dicken Abstandselement zwischen dem ersten Arretierelement 60 und dem Gehäuse 40 eingespannt.

Der Innenring 50 des zweiten Wälzlagers 38 liegt stirnseitig an seiner Rotorseite an einem Absatz in der Rotorwelle 16 an. An seiner Generatorseite ist der Innenring 50 des zweiten Wälzlagers 38 durch ein Verriegelungselement 72 in seiner axialen Position fixiert, welches hier als Mutter ausgebildet ist. Der Außenring 52 des zweiten Wälzlagers 38 wird stirnseitig an seiner Rotorseite durch ein drittes Arretierelement 64 in seiner axialen Position in dem Gehäuse 40 gehalten. Das dritte Arretierelement 64 ist lösbar an dem Gehäuse 40 befestigt, hier durch eine Verschraubung. An dem dritten Arretierelement 64 ist stirnseitig auf dessen Rotorseite ein Dichtelement 70 befestigt, hier ebenfalls durch eine Verschraubung. Auch dieses Dichtelement 70 erstreckt sich radial zu der Rotorwelle 16 und dichtet das zweite Wälzlager 38 rotorseitig ab. Der Außenring 52 des zweiten Wälzlagers 38 wird stirnseitig an seiner Generatorseite durch ein viertes Arretierelement 66 in seiner axialen Position in dem Gehäuse 40 gehalten. An dem vierten Arretierelement 66 ist stirnseitig auf dessen Generatorseite ebenfalls ein Dichtelement 70 befestigt, hier ebenfalls durch eine Verschraubung. Dieses Dichtelement 70 erstreckt sich ebenfalls radial zu der Rotorwelle 16 und dichtet das erste Wälzlager 18 somit generatorseitig ab. Dieses Dichtelement 70 dichtet dabei an dem Verriegelungselement 72 statt an der Rotorwelle 16 ab. In einer weiteren Ausführungsform dichtet dieses Dichtelement 70 auch an der Rotorwelle 16 ab.

Zwischen dem Gehäuse 40 und dem dritten Arretierelement 64 ist ein zweites Abstandselement 92 eingespannt, welches hier gemeinsam mit dem dritten Arretierelement 64 an dem Gehäuse 40 angeschraubt ist. Das dritte Arretierelement 64 drückt den Außenring 52 des zweiten Wälzlagers 38 mit einer axialen Kraft axial in Richtung des Generators 24 über die Wälzkörper des zweiten Wälzlagers 38 gegen dessen Innenring 50, wodurch eine Vorspannung vorgegeben wird. Durch eine Auswahl des zweiten Abstandselements 92 aus einem Set von axial unterschiedlich dicken Abstandselementen kann dabei die axiale Kraft eingestellt und somit auch die Vorspannung in dem zweiten Wälzlager 38 vorgegeben werden. In anderen Ausführungsformen wird alternativ oder zusätzlich auch ein Abstandselement aus einem Set von unterschiedlich dicken Abstandselementen zwischen dem vierten Arretierelement 66 und dem Gehäuse 40 eingespannt.

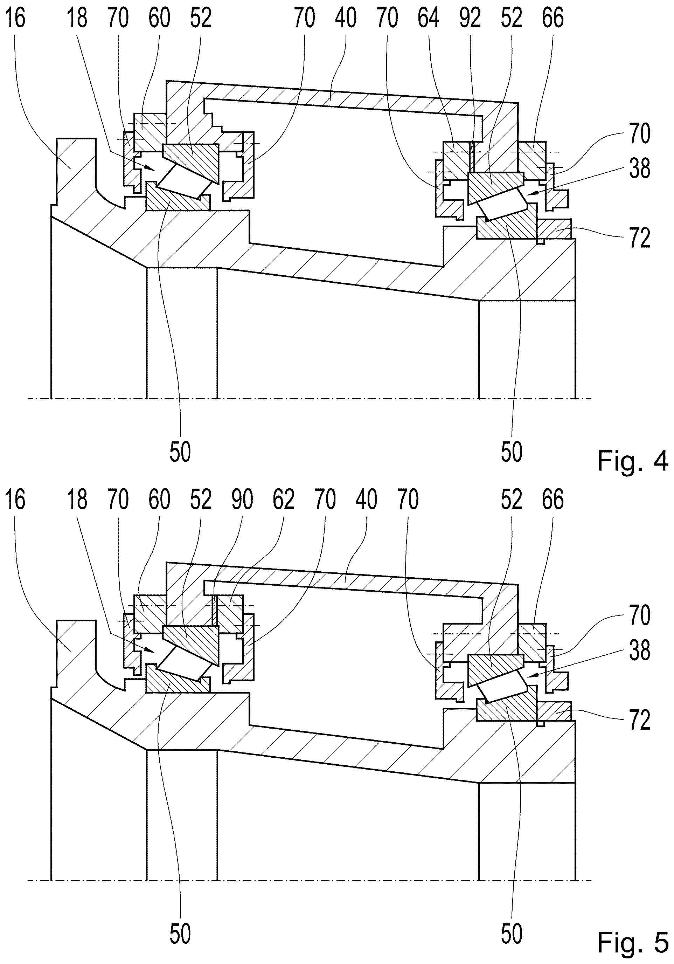

Die Nummerierung der Arretierelemente 60, 62, 64, 66 dient hier der Zuordnung. Weitere Ausführungsformen, wie beispielsweise die Ausführungsform von Fig. 4 und die Ausführungsform von Fig. 5, weisen weniger als die vier Arretierelemente 60, 62, 64, 66 auf, wobei die Nummerierung der verbleibenden Arretierelemente, deren Position einer der Arretierelemente 60, 62, 64, 66 der ersten Ausführungsform entsprechen, beibehalten wird. Entsprechend kann es dann beispielsweise ein erstes Arretierelement 60 und ein drittes Arretierelement 64 geben, aber kein zweites Arretierelement 62. Gleiches gilt für die Abstandselemente 90, 92.

Fig. 4 veranschaulicht eine zweite Ausführungsform der Lagerungsanordnung, welche ähnlich zu der ersten Ausführungsform ist. Es werden nur Unterschiede erläutert. Bei der zweiten Ausführungsform entfällt das zweite Arretierelement 62. Stattdessen bildet das Gehäuse 40 an dessen Stelle einen Absatz aus, an welchem sich der Außenring 52 des ersten Wälzlagers 18 axial in Richtung des Generators 24 stirnseitig abstützt. Das erste Abstandselement 90 entfällt somit auch. Die Vorspannung der Lagerungsanordnung wird nun allein an dem zweiten Wälzlager 38 durch die Auswahl des zweiten Abstandselements 92 vorgegeben. Das Dichtelement 70 zum generatorseitigen Abdichten des ersten Wälzlagers 18 ist nun direkt mit dem Gehäuse 40 verschraubt. In einer anderen Ausführungsform ist dieses Dichtelement 70 einstückig mit dem Gehäuse 40 ausgebildet.

Fig. 5 veranschaulicht eine dritte Ausführungsform der Lagerungsanordnung, welche ähnlich zu der zweiten Ausführungsform ist. Im Vergleich zu der zweiten Ausführungsform sind hier die Seiten vertauscht, an welcher das Gehäuse 40 einen Absatz ausbildet und an welcher die Vorspannung der Lagerungsanordnung einstellbar ist. Im Vergleicht zu der ersten Ausführungsform entfällt also nun das dritte Arretierelement 64. Stattdessen bildet das Gehäuse 40 an dessen Stelle einen Absatz aus, an welchem sich der Außenring 52 des zweiten Wälzlagers 38 axial in Richtung des Rotors 12 stirnseitig abstützt. Das zweite Abstandselement 92 entfällt somit auch. Die Vorspannung der Lagerungsanordnung wird nun allein an dem ersten Wälzlager 18 durch die Auswahl des ersten Abstandselements 90 vorgegeben. Das Dichtelement 70 zum rotorseitigen Abdichten des zweiten Wälzlagers 38 ist nun direkt mit dem Gehäuse 40 verschraubt. In einer anderen Ausführungsform ist dieses Dichtelement 70 einstückig mit dem Gehäuse 40 ausgebildet.

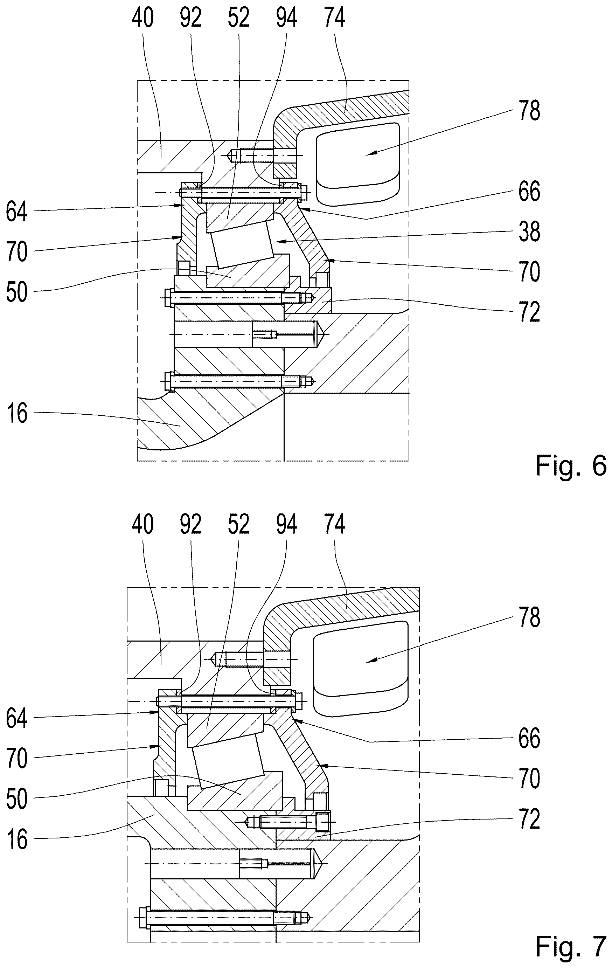

Fig. 6 veranschaulicht eine vierte Ausführungsform der Lagerungsanordnung, bei welcher nur das zweite Wälzlager 38 und damit ein generatorseitiger Endbereich der Rotorwelle 16 gezeigt ist.

An dem Gehäuse 40 ist ein Generatorgehäuse 74 stirnseitig angeschraubt. Ein rotoseitiges Abdeckelement bildet sowohl das dritte Arretierelement 64 als auch das sich davon wegerstreckende Dichtelement 70 als gemeinsames Bauteil aus. Zwischen dem dritten Arretierelement 64 und dem Gehäuse 40 ist das zweite Abstandselement 92 eingespannt. Ein generatorseitiges Abdeckelement bildet sowohl das vierte Arretierelement 66 als auch das sich davon wegerstreckende Dichtelement 70 als gemeinsames Bauteil aus. Zwischen dem vierten Arretierelement 66 und dem Gehäuse 40 ist ein drittes Abstandselement 94 eingespannt. Das dritte Arretierelement 64 und das vierte Arretierelement 66 werden gemeinsam von einer Schraube an dem Gehäuse 40 gehalten, welche sich durch eine axiale Durchgangsöffnung an dem Gehäuse 40 erstreckt. Die Verschraubung des Generatorgehäuses 74 mit dem Gehäuse 40 und die Verschraubung des dritten und vierten Arretierelements 64, 66 erfolgt von Seiten des Generators 24. Dafür weist das Generatorgehäuse 74 in seiner umlaufenden Wand eine Zugangsöffnung 78 auf.

Das Verriegelungselement 72 ist nun als ringförmige Platte ausgebildet, welche von Seiten des Rotors 12 mit der Rotorwelle 16 verschraubt wird und so den Innenring 50 des zweiten Wälzlagers 38 gegen den Absatz in der Rotorwelle 16 zur Befestigung drückt. Das Verriegelungselement 72 sitzt hierbei radial außen auf einer Eingangswelle 76 des Generators 24 auf. Die Verschraubung erfolgt hier aus Richtung des Rotors 12. Die Rotorwelle 16 ist ebenfalls von Seiten des Rotors 12 mit der Eingangswelle 76 des Generators 24 verschraubt, welche hier durch einen Planetenträger eines Planetenradsatzes des Generators 24 ausgebildet wird. Die Verschraubung der Rotorwelle 16 mit der Eingangswelle 76 erfolgt an einem sich radial nach außen erstreckenden Flansch der Rotorwelle 16, welcher auch einen Sitz für den Innenring 50 des zweiten Wälzlagers 38 ausbildet. Die Schrauben sind so radial außen vorbei an der Rotorwelle 16 zugänglich.

In einer anderen Ausführungsform ist das Verriegelungselement 72 nicht verschraubt, sondern anders befestigt. In einer Ausführungsform ist das Verriegelungselement 72 auf die Eingangswelle 76 des Generators 24 aufgeschrumpft.

Zwischen dem Verriegelungselement 72 und der Rotorwelle 16 ist in einer anderen Ausführungsform ein Abstandselement ausgewählt aus einem Set von unterschiedlich dicken Abstandselementen eingespannt. Dadurch kann der Innenring 50 des zweiten Wälzlagers 38 stärker geklemmt werden.

Fig. 7 veranschaulicht eine fünfte Ausführungsform der Lagerungsanordnung, welche ähnlich zu der vierten Ausführungsform ist. Es werden nur Unterschiede erläutert. Die Verschraubung der Rotorwelle 16 mit der Eingangswelle 76 erfolgt nun an einem sich radial nach innen erstreckenden Flansch der Rotorwelle 16. Die Rotorwelle 16 weist eine zentrale axiale Durchgangsöffnung oder Ausnehmung auf, durch welche die Schrauben zum Verbinden der Rotorwelle 16 mit der Eingangswelle 76 zugänglich sind. Das Verriegelungselement 72 ist wird von Seiten des Generators 24 mit der Rotorwelle 16 verschraubt und drückt so den Innenring 50 des zweiten Wälzlagers 38 gegen den Absatz in der Rotorwelle 16 zur Befestigung. Die Form des Verriegelungselements 72 ist hier entsprechend anders und weist statt eines Sacklochs mit Innengewinde nun eine Durchgangsöffnung auf, welche einen generatorseitigen Endbereich mit breiterem Durchmesser zum Versenken eines Schraubkopfs aufweist.

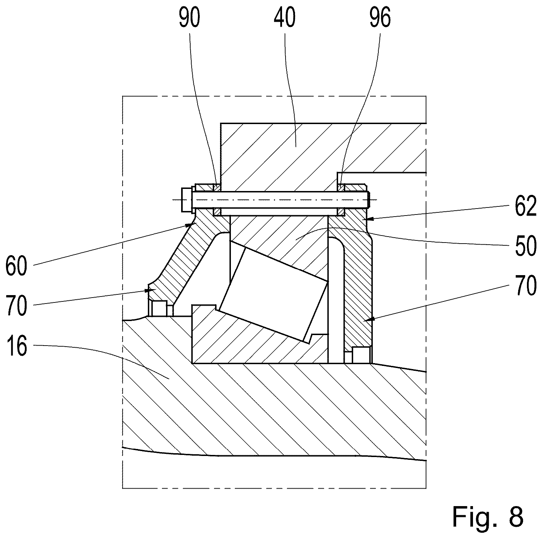

Fig. 8 veranschaulicht eine sechste Ausführungsform der Lagerungsanordnung, bei welcher nur das erste Wälzlager 18 und damit ein rotorseitiger Endbereich der Rotorwelle 16 gezeigt ist. Die sechste Ausführungsform weist rotorseitig ein Abdeckelement auf, welches ähnlich wie bei der dritten und vierten Ausführungsform das erste Arretierelement 60 und das zugeordnete Dichtelement 70 als eine Baugruppe ausbildet. Die sechste Ausführungsform weist zudem generatorseitig ein Abdeckelement auf, welches ähnlich wie bei der dritten und vierten Ausführungsform das zweite Arretierelement 62 und das zugeordnete Dichtelement 70 als eine Baugruppe ausbildet. Die beiden Abdeckelemente sind, ebenfalls ähnlich wie bei der dritten und vierten Ausführungsform, durch eine Schraube an dem Gehäuse 40 befestigt. Diese Schraube ist aus Richtung des Rotors 12 zugänglich. Zwischen dem ersten Arretierelement 60 und dem Gehäuse 40 ist dabei das ausgewählte erste Abstandselement 90 eingespannt. Zusätzlich ist generatorseitig ein weiteres Abstandselement 96 zwischen dem zweiten Arretierelement 62 und dem Gehäuse 40 eingespannt. Der Innenring 50 des ersten Wälzlagers 18 wird wie zuvor axial stirnseitig gegen einen Absatz der Rotorwelle 16 gedrückt. Die axial wirkende Kraft und damit auch die Vorspannung ist hier entsprechend durch Abstimmung der beiden Abstandselemente 90, 96 einstellbar.

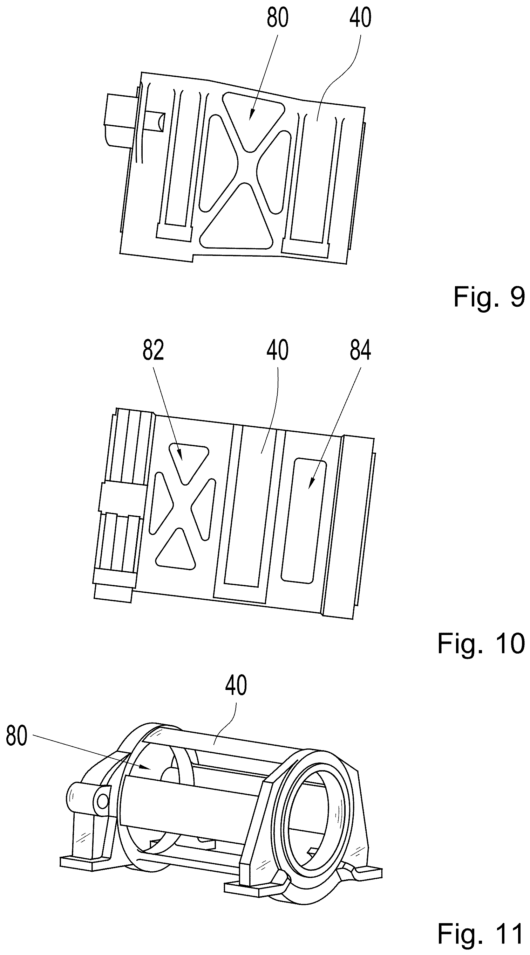

Die Figs. 9, 10 und 11 zeigen eine erste, zweite und dritte Ausführungsform des Gehäuses 40 der Lageranordnung. Die beiden Wälzlager 18, 38 sind jeweils in axialen Endbereichen des Gehäuses 40 angeordnet. Das Gehäuse 40 gemäß der ersten Ausführungsform und damit von Fig. 9 weist axial mittig in seiner umlaufenden Wand eine Zugangsöffnung 80 auf, durch welche die entsprechenden Verschraubungen in dem Gehäuse 40 festgezogen und auch gelöst werden können. Das Gehäuse 40 ist im Bereich der Zugangsöffnung 80 durch sich kreuzende Streben verstärkt, sodass acht separate radiale Durchgangsöffnungen in der umlaufenden Wand ausgebildet werden.

Das Gehäuse 40 gemäß der zweiten Ausführungsform und damit von Fig. 10 weist axial an einem rotorseitigen Endbereich in seiner umlaufenden Wand eine erste Zugangsöffnung 82 auf, durch welche die entsprechenden Verschraubungen in dem Gehäuse 40 im Bereich des ersten Wälzlagers 18 festgezogen und auch gelöst werden können. Das Gehäuse 40 ist im Bereich der ersten Zugangsöffnung 82 durch sich kreuzende Streben verstärkt, sodass acht separate Durchgangsöffnungen ausgebildet werden. Zudem weist das Gehäuse 40 axial an einem generatorseitigen Endbereich in seiner umlaufenden Wand eine zweite Zugangsöffnung 84 auf, durch welche die entsprechenden Verschraubungen in dem Gehäuse 40 im Bereich des zweiten Wälzlagers 38 festgezogen und auch gelöst werden können. Die zweite Zugangsöffnung 84 weist zwei fluchtende sich in Umfangsrichtung erstreckende Schlitze auf.

Das Gehäuse 40 gemäß der dritten Ausführungsform und damit von Fig. 11 weist eine sich axial von dem rotorseitigen Endbereich zu dem generatorseitigen Endbereich in seiner umlaufenden Wand erstreckende Zugangsöffnung 80 auf, durch welche die entsprechenden Verschraubungen beidseitig in dem Gehäuse 40 festgezogen und auch gelöst werden können. Die Zugangsöffnung 80 wird hier durch sich vier axial von dem rotorseitigen Endbereich zu dem generatorseitigen Endbereich in der umlaufenden Wand erstreckende Schlitze ausgebildet. Die Gehäuse 40 sind in den gezeigten Ausführungsformen einstückig ausgebildet und in anderen Ausführungsformen mehrteilig.

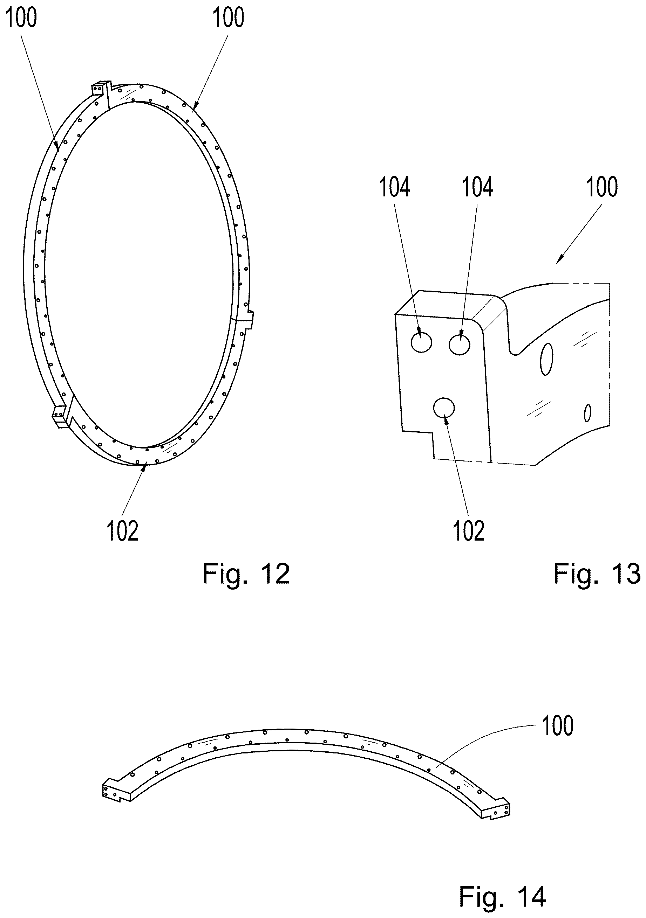

Die Figs. 12 bis 14 veranschaulichen ein Abdeckelement, welches gemeinsam bei den entsprechenden Ausführungsformen eines der Arretierelemente 60, 62, 64, 66 und das zugeordnete Dichtelement 70 als Baugruppe ausbildet. Das Abdeckelement ist in Umfangsrichtung in drei Segmente 100 unterteilt, welche sich um 120° eines Kreises erstrecken. Die Segmente 100 weisen stirnseitig jeweils einen Flansch auf, mit welchem diese an einem benachbarten der Segmente 100 anliegen. Der Flansch weist eine Sacklochbohrung 102 für einen Passstift und zwei Durchgangsöffnungen oder alternativ Sacklochbohrungen mit Innengewinde für das Verbinden mit dem benachbarten der Segmente 100 auf. Die Segmente 100 können durch die Zugangsöffnungen 80, 82, 84 des Gehäuses 40 in den Innenraum eingesetzt und dort montiert werden. Jedes Segment 100 bildet ein Segment des entsprechenden Arretierelements 60, 62, 64, 66 und des zugeordneten Dichtelements 70 einstückig gemeinsam aus. In anderen Ausführungsformen können die Dichtelemente 70 und die Arretierelemente 60, 62, 64, 66 analog segmentiert aber separat ausgebildet sein. In weiteren Ausführungsformen sind auch die Abstandselemente 90, 92, 94 analog segmentiert ausgebildet. Je nach gewünschter Montage sind nur einige der Abstandselemente 90, 92, 94, nur einige der Dichtelemente 70 und alternativ oder zusätzlich nur einige der Arretierelemente 60, 62, 64, 66 segmentiert ausgebildet.

### Bezugszeichen

- 10: Windkraftanlage
- 12: Rotor
- 14: Nabe
- 16: Rotorwelle
- 18: Erstes Wälzlager
- 20: Gondel
- 22: Getriebe
- 24: Generator
- 26: Bremse
- 28: Turm
- 30: Netzanschluss
- 38: Zweites Wälzlager
- 40: Gehäuse
- 42: Maschinenbett
- 50: Innenring
- 52: Außenring
- 60: Erstes Arretierelement
- 62: Zweites Arretierelement
- 64: Drittes Arretierelement
- 66: Viertes Arretierelement
- 70: Dichtelement
- 72: Verriegelungselement
- 74: Generatorgehäuse
- 76: Eingangswelle des Generators
- 78: Zugangsöffnung
- 80: Zugangsöffnung
- 82: Erste Zugangsöffnung
- 84: Zweite Zugangsöffnung
- 90, 92, 94, 96: Abstandselement
- 100: Segment
- 102: Sacklochbohrung

## Patentansprüche

1. Lagerungsanordnung für eine Rotorwelle (16) einer Windkraftanlage (10), wobei die Lagerungsanordnung ein Gehäuse (40) und wenigstens ein Lager (18, 38) aufweist, wobei das Lager (18, 38) mit einem Außenring (52) in dem Gehäuse (40) befestigt ist, wobei das Lager (18, 38) mit einem Innenring (50) an der Rotorwelle (16) befestigbar ist, wobei die Lagerungsanordnung dazu ausgebildet ist, eine axiale auf den Außenring (52) wirkende Kraft einzustellen, um eine Vorspannung des Lagers (18, 38) vorzugeben.

2. Lagerungsanordnung nach Anspruch 1, **dadurch gekennzeichnet, dass** das Lager (18, 38) als Kegelrollenlager ausgebildet ist.

3. Lagerungsanordnung nach Anspruch 1 oder 2, **dadurch gekennzeichnet, dass** die Lagerungsanordnung ein lösbar an dem Gehäuse (40) befestigtes Arretierelement (60, 62, 64, 66) aufweist, mittels welchem der Außenring (52) in seiner axialen Position in dem Gehäuse (40) gehalten wird, wobei zwischen dem Gehäuse (40) und dem Arretierelement (60, 62, 64, 66) für das Einstellen der axial auf den Außenring (52) wirkenden Kraft wenigstens ein Abstandselement (90, 92, 94, 96) einspannbar ist.

4. Lagerungsanordnung nach Anspruch 3, **dadurch gekennzeichnet, dass** die Lagerungsanordnung ein lösbar an der Rotorwelle (16) befestigtes weiteres Arretierelement (72) aufweist, mittels welchem der Innenring (50) in seiner axialen Position in der Rotorwelle (16) gehalten wird.

5. Lagerungsanordnung nach Anspruch 3 oder 4, **dadurch gekennzeichnet, dass** jeweilige Abstandselemente (90, 92, 94, 96) mehrteilig ausgebildet sind.

6. Lagerungsanordnung nach einem der Ansprüche 3 bis 5, **dadurch gekennzeichnet, dass** jeweilige Arretierelemente (60, 62, 64, 66) mehrteilig ausgebildet sind.

7. Lagerungsanordnung nach einem der Ansprüche 3 bis 6, **dadurch gekennzeichnet, dass** die Lagerungsanordnung ein Dichtelement (70) aufweist, welches an einem zugeordneten Arretierelement (60, 62, 64, 66) befestigt ist oder integral mit einem zugeordneten Arretierelement (60, 62, 64, 66) ausgebildet ist.

8. Lagerungsanordnung nach Anspruch 7, **dadurch gekennzeichnet, dass** das Dichtelement (70) mehrteilig ausgebildet ist.

9. Lagerungsanordnung nach einem der vorhergehenden Ansprüche, **dadurch gekennzeichnet, dass** das Gehäuse (40) an seiner umlaufenden Wand wenigstens eine Zugangsöffnung (80, 82, 84) aufweist, durch welche hindurch die axiale auf den Außenring (52) wirkende Kraft einstellbar ist.

10. Lagerungsanordnung nach einem der vorhergehenden Ansprüche, **dadurch gekennzeichnet, dass** die Lagerungsanordnung ein Generatorgehäuse (74) aufweist, wobei das Generatorgehäuse (74) an seiner umlaufenden Wand wenigstens eine Zugangsöffnung (78) aufweist, durch welche hindurch die axiale auf den Außenring (52) wirkende Kraft einstellbar ist.

11. Lagerungsanordnung nach einem der vorhergehenden Ansprüche, **dadurch gekennzeichnet, dass** die Lagerungsanordnung ein weiteres Lager (38, 18) aufweist, wobei die beiden Lager (18, 38) eine O-Anordnung aufweisen.

12. Windkraftanlage (10) mit einer Lagerungsanordnung nach einem der vorhergehenden Ansprüche.
